# EUROPEAN PATENT SPECIFICATION

(11) **EP 3 376 191 B1**
(45) Date of publication and mention of the grant of the patent: **07.10.2020**
(21) Application number: 16864295.7
(22) Date of filing: 10.11.2016
(51) Int. Cl.: G01L 3/10, B62D 5/04

(54) **YOKE COVER, TORQUE DETECTION DEVICE, ELECTRIC POWER STEERING DEVICE, YOKE COVER PRODUCTION METHOD, AND ELECTRIC POWER STEERING DEVICE PRODUCTION METHOD**
JOCHABDECKUNG, DREHMOMENTDETEKTOR, ELEKTRISCHE SERVOLENKVORRICHTUNG, HERSTELLUNGSVERFAHREN FÜR JOCHABDECKUNG UND HERSTELLUNGSVERFAHREN FÜR ELEKTRISCHE SERVOLENKUNG
COUVERCLE DE CULASSE AINSI QUE PROCÉDÉ DE FABRICATION DE CELUI-CI, DISPOSITIF DE DÉTECTION DE COUPLE, ET DISPOSITIF DE DIRECTION ASSISTÉE ÉLECTRIQUE AINSI QUE PROCÉDÉ DE FABRICATION DE CELUI-CI

(30) Priority: 11.11.2015 JP 2015221285
(43) Date of publication of application: 19.09.2018
(73) Proprietor: NSK LTD., Shinagawa-ku, Tokyo 141-8560 (JP); Nakanishi Metal Works Co., Ltd., Osaka-shi, Osaka 530-8566 (JP)
(72) Inventor: HATANAKA Kazuyuki, Fujisawa-shi Kanagawa 251-8501 (JP); SHIGETA Taishi, Maebashi-shi Gunma 371-8527 (JP); SUGITA Sumio, Fujisawa-shi Kanagawa 251-8501 (JP); KAWAI Yasuhiro, Fujisawa-shi Kanagawa 251-8501 (JP); TAKI Masayuki, Osaka-shi Osaka 530-8566 (JP)
(74) Representative: Vossius & Partner Patentanwälte Rechtsanwälte mbB
(86) International application number: PCT/JP2016/083339
(87) International publication number: WO 2017/082334

(56) References cited:
- WO-A1-2014/147687
- JP-A- H1 078 358
- JP-A- 2004 301 583
- JP-A- 2005 037 176
- JP-A- 2014 122 869
- JP-A- 2014 122 869

## Description

### TECHNICAL FIELD

The present invention relates to a yoke cover that configures a torque detection device included in an automotive electric power steering device and is assembled to two electromagnetic yokes axially facing each other.

### BACKGROUND ART

An automotive electric power steering device is configured to detect steering torque generated by driver's manipulation of a steering wheel with use of a torque detection device (torque sensor) and apply steering assist torque by a motor to a steering system to reduce a driver's steering load (see Patent Literatures 1 to 3 or the like).

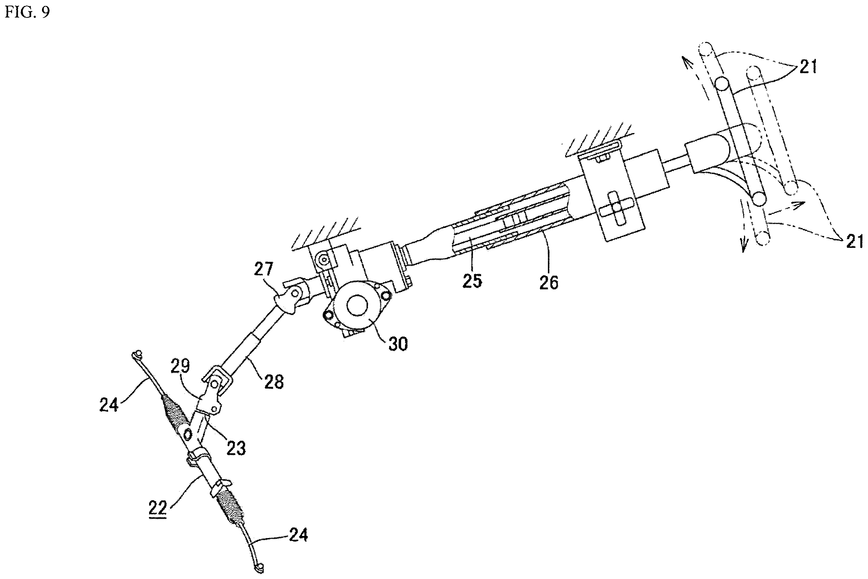

FIG. 9 is a partially sectioned side view exemplarily depicting an electric motor 30 functioning as an assist-power generation source and configured to reduce force necessary for manipulation of a steering wheel 21 (see Patent Literature 1 or the like).

In an automotive steering device exemplified in FIG. 9, rotation of the steering wheel 21 is transmitted to an input shaft 23 of a steering gear unit 22, so that the input shaft 23 rotates to allow a pair of left and right tie rods to be pushed and pulled. Accordingly, a steering angle is provided to a front wheel. The steering wheel 21 is supported at a rear end of a steering shaft 25 that is fixed to a vehicle body and is rotatably supported by a steering column 26. The steering shaft 25 has a front end supported at a rear end of an intermediate shaft 28 via a universal joint 27, and the intermediate shaft 28 has a front end connected to the input shaft 23 via a universal joint 29.

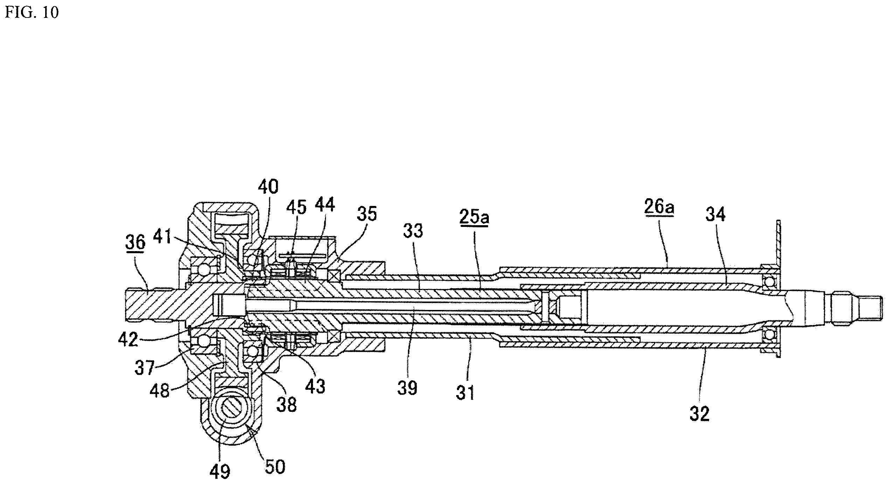

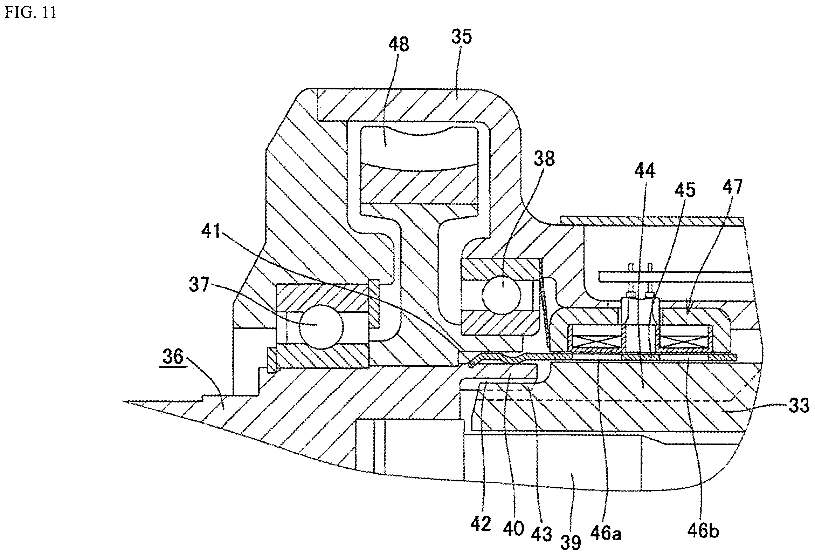

The electric power steering device will be described next in terms of an exemplary specific structure thereof with reference to a sectional view in FIG. 10 and an enlarged view in FIG. 11. A steering column 26a includes an inner column 31 and an outer column 32 assembled to have an entire length shortened upon secondary impact, and is supported at the vehicle body. The steering column 26a is provided therein with a rotatably supported steering shaft 25a that includes a lower shaft 33 and an upper shaft 34 assembled to transmit torque and have an entire length shortened upon secondary impact. The upper shaft 34 protruding from a rear end opening of the outer column 32 has a rear end fixing the steering wheel 21 (see FIG. 9). The inner column 31 has a front end joining and fixing a housing 35 into which a front half of the lower shaft 33 is inserted. In the housing 35, the lower shaft 33 functioning as an input shaft is provided thereahead with an output shaft 36 rotatably supported by a pair of ball bearings 37 and 38. The output shaft 36 and the lower shaft 33 are coupled via a torsion bar 39. The output shaft 36 has a front end protruding from a front end opening of the housing 35 and joining the universal joint 27 (see FIG. 9).

The output shaft 36 has a rear end provided with a tubular portion 40. The tubular portion 40 has an outer circumferential surface provided with a circumferential groove 41 extending along the entire circumference. The tubular portion 40 has an inner circumferential surface provided with a female stopper 42 having circumferential unevenness. The lower shaft 33 has an outer circumferential surface provided at a front end thereof with a male stopper 43 that has circumferential unevenness and has an outer diameter (a diameter of a circumscribed circle) smaller than that of a portion close to the front end. The male stopper 43 and the female stopper 42 engage each other at the uneven portions to be relatively rotatable within a predetermined angle range. This prevents excessive torsion of the torsion bar 39.

The lower shaft 33 is made of steel as a magnetic metal, and is provided, at the portion close to the front end of the outer circumferential surface, with a torque detection uneven portion 44 having circumferential unevenness. The torque detection uneven portion 44 is provided, around an outer circumference thereof, with a torque detection sleeve 45 that is made of a conductive nonmagnetic metal such as an aluminum alloy and has a cylindrical shape. The torque detection sleeve 45 has a proximal end fittedly outserted and fixed to the tubular portion 40. The proximal end of the torque detection sleeve 45 in this state has an edge caulked to the circumferential groove 41 for axial positioning and prevention of deformation of the torque detection sleeve 45. The torque detection sleeve 45 is has a portion positioned around an outer circumference of the torque detection uneven portion 44 and provided with a plurality of windows 46a and 46b. The torque detection uneven portion 44 and the torque detection sleeve 45 are provided, on the outer circumferences, with a torque detector 47 fittedly inserted and fixed to the housing 35.

The output shaft 36 has a portion close to the rear end provided with a worm wheel 48 fittedly outserted and fixed thereto, and the worm wheel 48 meshes with a worm 49 rotatably supported in the housing 35. The worm wheel 48 and the worm 49 configure a worm speed reducer 50.

The housing 35 supports and fixes the electric motor 30 (see FIG. 9) which has an output shaft joined to a proximal end of the worm 49 to enable transmission of torque.

In the electric power steering device configured as described above, when a driver manipulates the steering wheel 21 to apply torque as steering force to the steering shaft 25a, the torsion bar 39 has elastic torsion by a degree according to a direction and strength of the torque. This causes change in circumferential position relationship between the torque detection uneven portion 44 and the torque detection sleeve 45 and thus generates impedance variation of a coil configuring the torque detector 47. The direction and the strength of the torque can be detected in accordance with the impedance variation. The electric motor 30 generates assist power according to a detection result of the torque. This assist power is increased by the worm speed reducer 50 and is then applied to the output shaft 36. The driver then needs less force for manipulation of the steering wheel 21.

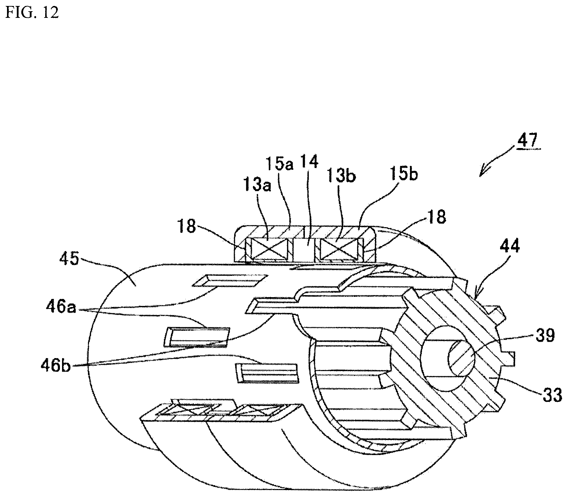

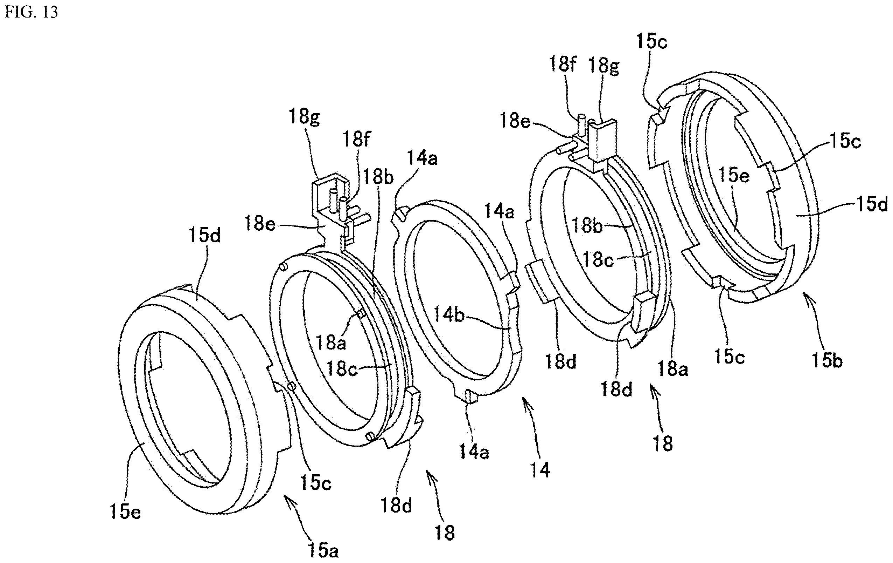

The torque detector 47 configuring the torque detection device according to Patent Literature 3 will be described next with reference to a partially sectional perspective view in FIG. 12 and an exploded perspective view in FIG. 13.

The torque detector 47 includes the torque detection uneven portion 44 provided at the lower shaft 33, a pair of detection coils 13a and 13b disposed inside the housing 35, and the torque detection sleeve 45 disposed between the torque detection uneven portion 44 and the detection coils 13a and 13b.

The torque detection sleeve 45 has an outer circumference surrounded with electromagnetic yokes 15a and 15b retaining coil bobbins 18 having the wound detection coils 13a and 13b having an identical specification. Specifically, the detection coils 13a and 13b are disposed coaxially with the torque detection sleeve 45. The detection coil 13a surrounds a first window row consisting of the windows 46a whereas the detection coil 13b surrounds a second window row consisting of the windows 46b.

The torque detector 47 includes the two identically shaped coil bobbins 18 that have the wound coils 13a and 13b and face each other.

The coil bobbins 18 each have a flange 18b that has a lateral end provided with a terminal attachment portion 18e configuring a coil connector to be connected with a substrate connector. There are provided regulating portions 18d axially symmetric about, as a symmetric axis, a perpendicular including the center of the coil bobbin 18 having an upper end provided with the terminal attachment portion 18e.

The regulating portions 18d each include a base protruding radially outward from part of the flange 18b, and a protrusion provided in one of circumferentially halved regions of the base and extending axially outward from the coil bobbin 18. In a state where the two coil bobbins 18 are disposed coaxially with the flanges 18b facing each other, the regulating portions 18d of the coil bobbins 18 circumferentially butt each other to be relatively positionally determined in a rotation angle direction.

The terminal attachment portion 18e has a substantially rectangular parallelepiped shape protruding radially outward from a laterally upper end of the flange 18b, and has an upper surface provided with two terminals 18f that are press fitted and fixed thereto and are to be connected to the substrate connector. These two coil terminals 18f are in parallel with each other and are fixed to protrude radially outward from the upper surface of the terminal attachment portion 18e.

The terminal attachment portion 18e is further provided, at one of lateral portions, with a tabular guide 18g protruding radially outward from the upper surface of the terminal attachment portion 18e.

The electromagnetic yokes 15a and 15b are shaped identically and each include a cylindrical portion 15d outserted to the coil bobbin 18 and a ring-shaped bottom 15e provided at an axially outer end when fixed to the coil bobbin 18. The bottom 15e is equal in inner diameter to a cylindrical portion (a groove 18c) of the coil bobbin 18.

The electromagnetic yokes 15a and 15b each have three dent portions 15c provided at an end opposite to the bottom 15e of the cylindrical portion 15d and circumferentially distant from one another at a predetermined angle.

There is provided a single yoke cover 14 that has a substantially ring shape and is provided, on an outer circumferential surface, with three protrusions 14a circumferentially distant from one another at a predetermined angle.

In a state where the protrusions 14a are fitted to the dent portions 15c of the electromagnetic yokes 15a and 15b, the yoke cover 14 is press fitted to inner circumferences of the cylindrical portions 15d of the two facing electromagnetic yokes 15a and 15b.

In comparison to the torque detection device according to Patent Literature 2, the torque detection device according to Patent Literature 3 achieves reduction in the number of constituent elements and reduction in the number of times of press fitting the yoke cover 14 configured as described above to the electromagnetic yokes 15a and 15b.

Patent Literature 4 relates to a torque detection apparatus configured to detect torque generated at a rotation shaft, an electric power steering apparatus, and a vehicle, each including the torque detection apparatus.

### CITATIONS LIST

### PATENT LITERATURES

Patent Literature 1: International Publication No. 2014/199959 Publication
Patent Literature 2: International Publication No. 2004/018987 Pamphlet
Patent Literature 3: Japanese Unexamined Patent Application Publication No. 2014-122869
Patent Literature 4: WO 2014/147687 A1 which discloses a yoke cover configuring a torque detection device including paired detection coils having impedance varied by torque generated at a rotary shaft and configured to detect the torque in accordance with output voltage of the detection coils, the single yoke cover interposed between two electromagnetic yokes axially facing each other and fitted to inner circumferences of cylindrical portions of the two electromagnetic yokes to retain the two electromagnetic yokes, the yoke cover comprising: a first cylindrical surface fitted to first one of the two electromagnetic yokes and provided in each of a plurality of first circumferential portions in an outer circumferential surface, and a second cylindrical surface fitted to second one of the two electromagnetic yokes and provided in each of a plurality of second circumferential portions circumferentially displaced from the first circumferential portions in the outer circumferential surface; and a corner radius portion provided at a portion axially closer to the first one of the electromagnetic yokes than each of the first cylindrical surfaces, and a corner radius portion provided at a portion axially closer to the second one of the electromagnetic yokes than each of the second cylindrical surfaces.

### SUMMARY OF INVENTION

### TECHNICAL PROBLEMS

In the single yoke cover 14 included in the torque detection device according to Patent Literature 3, axial ends of a cylindrical surface other than the protrusions 14a are press fitted to the two electromagnetic yokes 15a and 15b. The yoke cover 14 thus needs to have high accuracy of the cylindrical surface.

The yoke cover 14 is designed to achieve firm retentive force in the state where the axial ends of the cylindrical surface of the yoke cover 14 are press fitted to the two electromagnetic yokes 15a and 15b. The yoke cover 14 is thus provided, at part of the outer circumferential surface, with a corner radius portion 14b for improvement in press fitting property.

When the yoke cover 14 is press fitted to the electromagnetic yokes 15a and 15b disposed along the corner radius portion 14b, the cylindrical surface other than the protrusions 14a is press fitted and has a large circumferential length, which may require stronger press fitting force to deteriorate work efficiency.

Consideration is now given to an example of obtaining a punched product through typical press punching.

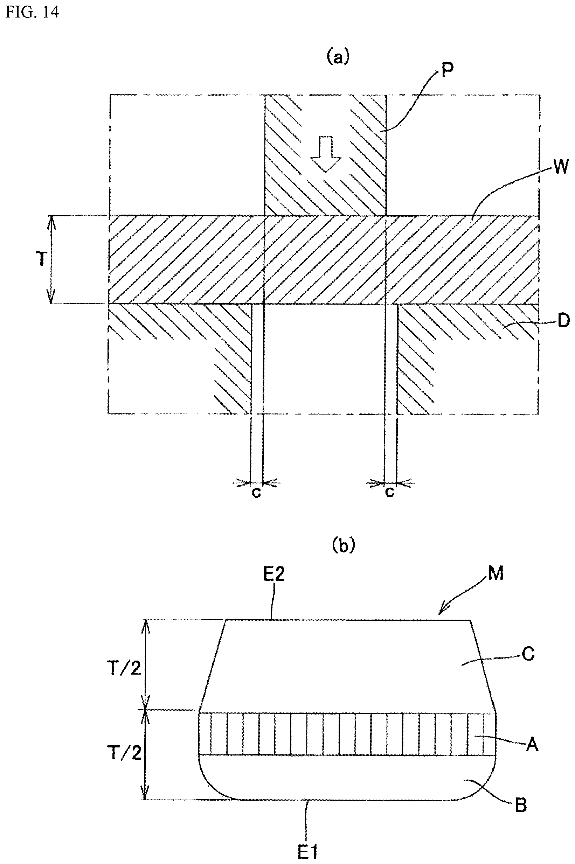

As depicted in an enlarged longitudinal sectional view of a main part in FIG. 14(a), when a plate W having a thickness T and placed on a die D is press punched by pressing a punch P, the processed plate W has shearing deformation only in a clearance c and the immediate vicinity thereof.

FIG. 14(b) is an enlarged front view depicting a punched product M obtained by the press punching. The punched product M has a highly accurate smooth shear surface A positioned close to a lower end E1 but has no highly accurate smooth shear surface close to an upper end E2.

The punched product M also has a shear droop B below the shear surface A and a fracture surface C above the shear surface A.

As described above, such ordinary press punching provides the shear surface only on one side and fails to achieve the above yoke cover to be press fitted to the two electromagnetic yokes.

In order to achieve the yoke cover to be press fitted to the two electromagnetic yokes, shaving or the like may be executed after the press punching or the press punching may be replaced with special processing such as fine blanking to form highly accurate smooth shear surfaces on the entire surfaces in a thickness direction.

Furthermore, the corner radius portion provided at each axial end for improvement in press fitting property needs to be formed through additional processing.

The yoke cover in the torque detection device according to Patent Literature 3 can achieve reduction in the number of constituent elements and the like, but can still be improved for higher work efficiency in assembling the yoke cover to the electromagnetic yokes and for reduction in production cost.

In view of this, it is an object of the present invention to improve work efficiency in assembling a single yoke cover to two electromagnetic yokes configuring a torque detection device and achieve reduction in production cost for the yoke cover.

### SOLUTIONS TO PROBLEMS

When press punching is executed as depicted in FIG. 14(a), the punched product M depicted in FIG. 14(b) has the highly accurate smooth shear surface A close to the lower end E1, the shear droop B below the shear surface A, and the fracture surface C above the shear surface A.

In contrast, the plate W has a hole after the punched product M is press punched as depicted in FIG. 14(a), and the hole has an inner surface provided with a highly accurate smooth shear surface close to the upper end E2, a shear droop above the shear surface, and a fracture surface below the shear surface.

The inventors of the present application have initially focused on the facts that the position in the thickness direction of the shear surface formed through such press punching and the portions provided with the shear droop and the fracture surface are varied in accordance with a direction of punching the plate to be processed into the product, and that the shear droop is provided as the corner radius portion for improvement in press fitting property.

The inventors of the present application have reached an idea of forming, on the outer circumferential surface of the yoke cover, the shear surface to be fitted to first one of the two electromagnetic yokes and the shear surface to be fitted to second one of the electromagnetic yokes in different punching directions in a circumferential portion. The inventors have achieved the present invention through consideration, trial, evaluation, and the like based on the idea.

The inventors of the present application have also focused on possibility of reduction in production cost with maintained workability in assembly to the electromagnetic yokes even in a case where the yoke cover obtained through such press punching is shaped through processing other than the press punching.

The present invention is defined in the claims. In order to solve the problems, the present invention provides a yoke cover configuring a torque detection device including paired detection coils having impedance varied by torque generated at a rotary shaft and configured to detect the torque in accordance with output voltage of the detection coils, the single yoke cover interposed between two electromagnetic yokes axially facing each other and fitted to inner circumferences of cylindrical portions of the two electromagnetic yokes to retain the two electromagnetic yokes, the yoke cover including:
a first cylindrical surface fitted to first one of the two electromagnetic yokes and provided in each of a plurality of first circumferential portions in an outer circumferential surface, and a second cylindrical surface fitted to second one of the two electromagnetic yokes and provided in each of a plurality of second circumferential portions circumferentially displaced from the first circumferential portions in the outer circumferential surface; and
a corner radius portion provided at a portion axially closer to the first one of the electromagnetic yokes than each of the first cylindrical surfaces, and a corner radius portion provided at a portion axially closer to the second one of the electromagnetic yokes than each of the second cylindrical surfaces.

The yoke cover thus configured includes the cylindrical surfaces fitted to the electromagnetic yokes categorized into the first cylindrical surfaces fitted to the first one of the electromagnetic yokes and the second cylindrical surfaces fitted to the second one of the electromagnetic yokes, and the first cylindrical surfaces and the second cylindrical surfaces are circumferentially displaced from each other.

Furthermore, the corner radius portion is provided at the portion axially closer to the first one of the electromagnetic yokes than each of the first cylindrical surfaces, and the corner radius portion is provided at the portion axially closer to the second one of the electromagnetic yokes than each of the second cylindrical surfaces.

Fitting the yoke cover to the two electromagnetic yokes then needs less force due to reduction in circumferential length of the fitted portions. Furthermore, the electromagnetic yokes can be fitted along the corner radius portions provided at corners of the fitted portions for higher work efficiency.

Preferably, the portion axially closer to the second one of the electromagnetic yokes than each of the first cylindrical surfaces has a tapered surface gradually reduced in outer diameter as axially distant from an axial edge of each of the first cylindrical surfaces, and the portion axially closer to the first one of the electromagnetic yokes than each of the second cylindrical surfaces has a tapered surface gradually reduced in outer diameter as axially distant from an axial edge of each of the second cylindrical surfaces.

The yoke cover thus configured has the first cylindrical surfaces, the second cylindrical surfaces circumferentially displaced from the first cylindrical surfaces, the tapered surfaces at the portion axially closer to the second one of the electromagnetic yokes than the first cylindrical surfaces, and the tapered surfaces at the portion axially closer to the first one of the electromagnetic yokes than the second cylindrical surfaces.

The cylindrical surfaces required to have high accuracy have smaller areas. Such smaller surfaces to be processed highly accurately lead to reduction in production cost for the yoke cover.

In order to solve the problems, the present invention provides a yoke cover configuring a torque detection device including paired detection coils having impedance varied by torque generated at a rotary shaft and configured to detect the torque in accordance with output voltage of the detection coils, the single yoke cover interposed between two electromagnetic yokes axially facing each other and fitted to inner circumferences of cylindrical portions of the two electromagnetic yokes to retain the two electromagnetic yokes, the yoke cover including
a first cylindrical surface fitted to first one of the two electromagnetic yokes and provided in each of a plurality of first circumferential portions in an outer circumferential surface, and a second cylindrical surface fitted to second one of the two electromagnetic yokes and provided in each of a plurality of second circumferential portions circumferentially displaced from the first circumferential portions in the outer circumferential surface, and
the first cylindrical surface and the second cylindrical surface being shear surfaces formed by press punching in punching directions different from each other.

The yoke cover thus configured includes the cylindrical surfaces fitted to the electromagnetic yokes categorized into the first cylindrical surfaces fitted to the first one of the electromagnetic yokes and the second cylindrical surfaces fitted to the second one of the electromagnetic yokes, and the first cylindrical surfaces and the second cylindrical surfaces are circumferentially displaced from each other.

The corner radius portion is provided, as the shear droop of press punching, at the portion axially closer to the first one of the electromagnetic yokes than each of the first cylindrical surfaces, and the corner radius portion is provided, as the shear droop of press punching, at the portion axially closer to the second one of the electromagnetic yokes than each of the second cylindrical surfaces.

Fitting the yoke cover to the two electromagnetic yokes then needs less force due to reduction in circumferential length of the fitted portions. Furthermore, the electromagnetic yokes can be fitted along the corner radius portions provided at corners of the fitted portions for higher work efficiency.

Furthermore, the first cylindrical surfaces and the second cylindrical surfaces are circumferentially displaced, the fracture surface of press punching is provided at the portion axially closer to the second one of the electromagnetic yokes than each of the first cylindrical surfaces, and the fracture surface of press punching is provided at the portion axially closer to the first one of the electromagnetic yokes than each of the second cylindrical surfaces.

The cylindrical surfaces required to have high accuracy have smaller areas. Such smaller surfaces to be processed highly accurately lead to reduction in production cost for the yoke cover.

Moreover, the first cylindrical surfaces to be fitted to the first one of the electromagnetic yokes and the second cylindrical surfaces to be fitted to the second one of the electromagnetic yokes are provided as shear surfaces formed by press punching in the different punching directions, not by shaving or the like after the press punching, and not by special processing such as fine blanking in place of press punching.

The shear droops are provided through press punching at the portions closer to the first one of the electromagnetic yokes than the first cylindrical surfaces and the portions closer to the second one of the electromagnetic yokes than the second cylindrical surfaces. The corner radius portions enabling highly efficient fitting are thus automatically formed through the press punching for formation of the first cylindrical surfaces and the second cylindrical surfaces, with no additional processing for formation of the corner radius portions.

This achieves further reduction in production cost for the yoke cover.

Preferably, the first cylindrical surface and the second cylindrical surface adjacent to each other interpose a planar or curved portion positioned radially inside a virtual cylindrical surface including the first cylindrical surface and the second cylindrical surface.

Preferably, the outer circumferential surface is circumferentially provided with a plurality of protrusions extending radially outward from the inner circumferences of the electromagnetic yokes, the protrusions adjacent to each other interpose the single first cylindrical surface and the single second cylindrical surface, and the first cylindrical surface and the second cylindrical surface adjacent to each other interpose a planar or curved portion positioned radially inside a virtual cylindrical surface including the first cylindrical surface and the second cylindrical surface.

In any one of such configurations, each of the first cylindrical surfaces displaced from the axial center toward the first one of the electromagnetic yokes and the adjacent one of the second cylindrical surfaces displaced from the axial center toward the second one of the electromagnetic yokes are provided therebetween with the planar or curved portion positioned radially inside the virtual cylindrical surface including the first cylindrical surface and the second cylindrical surface to cause the first cylindrical surface and the second cylindrical surface to be distant from each other. The transition portion between the first cylindrical surface and the second cylindrical surface adjacent to each other will thus not affect fitting to the electromagnetic yokes.

Furthermore, the yoke cover has no axial directivity with no need for consideration of the direction (the front or the rear) upon fitting.

This achieves improvement in workability in fitting the yoke cover to the two electromagnetic yokes facing each other.

The present invention provides a torque detection device including paired detection coils having impedance varied by torque generated at a rotary shaft and configured to detect the torque in accordance with output voltage of the detection coils, the torque detection device further including the yoke cover.

The present invention provides an electric power steering device configured to apply steering assist torque to an automotive steering system, the electric power steering device including the torque detection device configured to detect steering torque received by a steering mechanism, and a motor controller configured to drive control an electric motor for application of the steering assist torque according to the steering torque detected by the torque detection device.

In order to solve the problems, the present invention provides a method of producing a yoke cover configuring a torque detection device including paired detection coils having impedance varied by torque generated at a rotary shaft and configured to detect the torque in accordance with output voltage of the detection coils, the single yoke cover interposed between two electromagnetic yokes axially facing each other and fitted to inner circumferences of cylindrical portions of the two electromagnetic yokes to retain the two electromagnetic yokes, the method including:
first punching of press punching a plate to form, as a shear surface, a first cylindrical surface fitted to first one of the two electromagnetic yokes, in each of a plurality of first circumferential portions in an outer circumferential surface; and
second punching of press punching, in a punching direction different from that of the first punching, the plate processed through the first punching, to form, as a shear surface, a second cylindrical surface fitted to second one of the two electromagnetic yokes, in each of a plurality of second circumferential portions circumferentially displaced from the first circumferential portions in the outer circumferential surface.

According to such a yoke cover production method, the press punching including the first punching and the second punching in the different punching directions provides, as shear surfaces, the first cylindrical surfaces to be fitted to the first one of the electromagnetic yokes and the second cylindrical surfaces to be fitted to the second one of the electromagnetic yokes. There is thus no need for shaving or the like after the press punching, with no execution of special processing such as fine blanking.

Furthermore, the shear droops are provided through the press punching at the portions closer to the first one of the electromagnetic yokes than the first cylindrical surfaces and the portions closer to the second one of the electromagnetic yokes than the second cylindrical surfaces. The corner radius portions enabling highly efficient fitting are thus automatically formed through the press punching for formation of the first cylindrical surfaces and the second cylindrical surfaces, with no additional processing for formation of the corner radius portions.

This achieves reduction in production cost for the yoke cover.

Preferably, the first cylindrical surface and the second cylindrical surface adjacent to each other interpose a planar or curved portion positioned radially inside a virtual cylindrical surface including the first cylindrical surface and the second cylindrical surface.

Preferably, the outer circumferential surface of the yoke cover is circumferentially provided with a plurality of protrusions extending radially outward from the inner circumferences of the electromagnetic yokes, the protrusions adjacent to each other interpose the single first cylindrical surface and the single second cylindrical surface, and the first cylindrical surface and the second cylindrical surface adjacent to each other interpose a planar or curved portion positioned radially inside a virtual cylindrical surface including the first cylindrical surface and the second cylindrical surface.

According to any one of such examples of the production method, each of the first cylindrical surfaces displaced from the axial center toward the first one of the electromagnetic yokes and the adjacent one of the second cylindrical surfaces displaced from the axial center toward the second one of the electromagnetic yokes, as shear surfaces formed by press punching in the different punching directions, are provided therebetween with the planar or curved portion positioned radially inside the virtual cylindrical surface including the first cylindrical surface and the second cylindrical surface to cause the first cylindrical surface and the second cylindrical surface to be distant from each other. The transition portion between the first cylindrical surface and the second cylindrical surface adjacent to each other will thus not affect fitting to the electromagnetic yokes.

Furthermore, the yoke cover has no axial directivity with no need for consideration of the direction (the front or the rear) upon fitting.

This achieves improvement in workability in fitting the yoke cover to the two electromagnetic yokes facing each other.

The present invention provides a method of producing an electric power steering device configured to apply steering assist torque to an automotive steering system, the method including fitting the yoke cover produced in accordance with the production method, to inner circumferences of cylindrical portions of two electromagnetic yokes axially facing each other and configuring a torque detection device included in the electric power steering device.

### ADVANTAGEOUS EFFECTS OF INVENTION

As described above, the yoke cover and the production method thereof according to the present invention achieve significant effects such as improvement in work efficiency in assembling the single yoke cover to the two electromagnetic yokes configuring the torque detection device and reduction in production cost for the yoke cover.

### BRIEF DESCRIPTION OF DRAWINGS

FIG. 1 is a perspective view of a yoke cover according to an embodiment of the present invention.
FIG. 2(a) is a front view of the yoke cover, and FIG. 2(b) is an enlarged front view of a main part thereof.
FIG. 3(a) is a plan view of the yoke cover, and FIG. 3(b) is a sectional view taken along arrows X-X indicated in FIG. 3(a).
FIG. 4(a) is a plan view of an electromagnetic yoke, and FIG. 4(b) is a sectional view taken along arrows Y-Y indicated in FIG. 4(a).
FIG. 5 is an exploded perspective view of the yoke cover and two electromagnetic yokes.
FIG. 6 is a front view depicting a state where the yoke cover is press fitted to inner circumferences of cylindrical portions of the two electromagnetic yokes, excluding remaining components configuring a torque detection device.
FIGs. 7(a) and 7(b) are explanatory views depicting a yoke cover production method according to an example of the embodiment of the present invention; FIG. 7(a) depicts first punching and FIG. 7(b) depicts second punching.
FIGs. 8(a) and 8(b) are explanatory views depicting the yoke cover production method according to another example of the embodiment of the present invention; FIG. 8(a) depicts first punching and FIG. 8(b) depicts second punching.
FIG. 9 is a partially sectioned side view of a steering device.
FIG. 10 is a sectional view of an electric power steering device.
FIG. 11 is an enlarged view of an upper half portion adjacent to a left end in FIG. 10.
FIG. 12 is a partially sectional perspective view of a torque detection device.
FIG. 13 is an exploded perspective view of the torque detection device, excluding detection coils.
FIG. 14(a) is an enlarged longitudinal sectional view of a main part exemplifying typical press punching, and FIG. 14(b) is an enlarged front view of a punched product obtained through the press punching depicted in FIG. 14(a).

### DESCRIPTION OF EMBODIMENTS

An embodiment of the present invention will now be described in detail with reference to the accompanying drawings. The present invention is not limited to the mode according to the accompanying drawings but includes all embodiments satisfying requirements recited in the patent claims.

The present invention provides a yoke cover functioning equally to the yoke cover (the yoke cover 14 depicted in FIGs. 12 and 13) configuring the torque detection device disclosed in Patent Literature 3, and is to be interposed between two electromagnetic yokes axially facing each other and be fitted to inner circumferences of cylindrical portions of the two electromagnetic yokes.

The present invention also provides a torque detection device functioning equally to the torque detection device (the torque detection device including the torque detector 47 depicted in FIG. 12) disclosed in Patent Literature 3, includes paired detection coils having impedances varied inversely or codirectionally by torque generated at a rotary shaft, and is configured to detect the torque in accordance with output voltage of the detection coils.

The present invention further provides an electric power steering device functioning equally to the electric power steering device disclosed in Patent Literature 1, and includes the torque detection device configured to detect steering torque received by a steering mechanism, and a motor controller configured to drive control an electric motor for application of steering assist torque in accordance with the steering torque detected by the torque detection device.

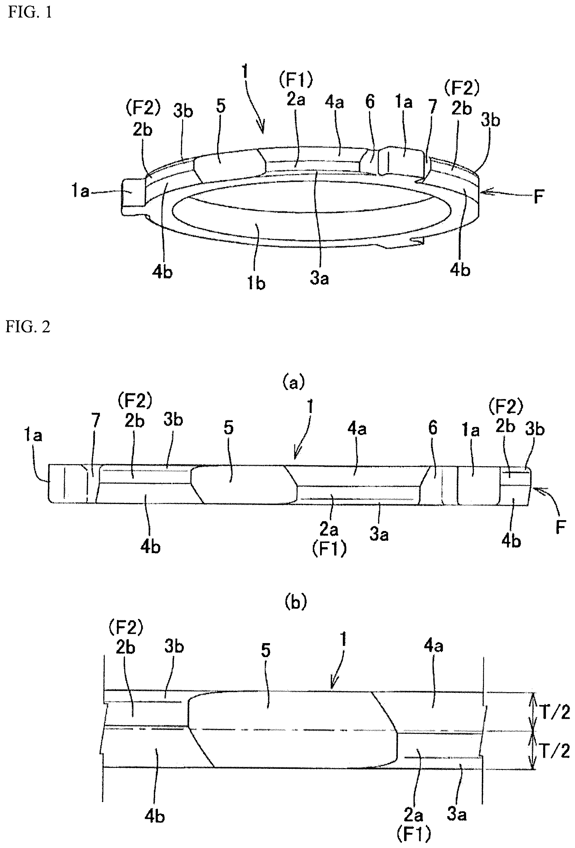

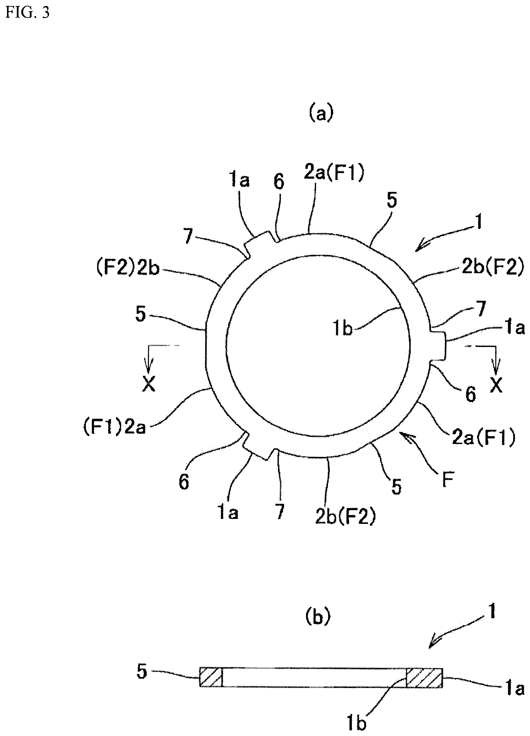

As depicted in a perspective view in FIG. 1, a front view in FIG. 2(a) and an enlarged front view of a main part in FIG. 2(b), and a plan view in FIG. 3(a) and a sectional view in FIG. 3(b), a yoke cover 1 according to the embodiment of the present invention has a substantially ring shape and an outer circumferential surface F that includes three first circumferential portions F1 each provided with a first cylindrical surface 2a and three second circumferential portions F2 circumferentially displaced from the first circumferential portions F1 and each provided with a second cylindrical surface 2b. The first cylindrical surfaces 2a and the second cylindrical surfaces 2b are disposed alternately in the circumferential direction.

The outer circumferential surface F includes at least two first circumferential portions F1 each provided with the first cylindrical surface 2a, at least two the second circumferential portions F2 each provided with the second cylindrical surface 2b, and at least two protrusions 1a.

The yoke cover 1 according to the present embodiment includes three protrusions 1a equally distant in the circumferential direction, and adjacent two protrusions 1a and 1a interpose a single first cylindrical surface 2a and a single second cylindrical surface 2b.

The first cylindrical surface 2a and the second cylindrical surface 2b adjacent to each other and disposed between the protrusions 1a and 1a interpose a planar portion 5.

The protrusion 1a and the first cylindrical surface 2a adjacent thereto interpose a planar portion 6 whereas the protrusion 1a and the second cylindrical surface 2b adjacent thereto interpose a planar portion 7.

The planar portions 5 to 7 are not necessarily planar but can be curved, and have only to be positioned radially inside a virtual cylindrical surface including the first cylindrical surface 2a and the second cylindrical surface 2b.

The first cylindrical surfaces 2a and the second cylindrical surfaces 2b are shear surfaces formed by press punching in different punching directions. The first cylindrical surfaces 2a are displaced in a first axial direction (downward in FIGs. 1, 2(a), and 2(b)) whereas the second cylindrical surfaces 2b are displaced in a second axial direction (upward in FIGs. 1, 2(a), and 2(b)). As depicted in FIG. 2(b), the first cylindrical surfaces 2a are positioned below an axial center (a center of a thickness T) whereas the second cylindrical surfaces 2b are positioned above the axial center.

The first cylindrical surfaces 2a are the shear surfaces formed by press punching. Each of the first cylindrical surfaces 2a is provided, close to a first axial end (lower end in FIGs. 1, 2(a), and 2(b)) of the first cylindrical surface 2a, with a shear droop (corner radius portion) 3a having an R shape, and is provided, close to a second axial end (upper end in FIGs. 1, 2(a), and 2(b)) of the first cylindrical surface 2a, with a fracture surface 4a.

Similarly, the second cylindrical surfaces 2b are the shear surfaces formed by press punching in a punching direction different from that of the press punching for formation of the first cylindrical surfaces 2a. Each of the second cylindrical surfaces 2b is provided, close to a first axial end (lower end in FIGs. 1, 2(a), and 2(b)) of the second cylindrical surface 2b, with a fracture surface 4b, and is provided, close to a second axial end (upper end in FIGs. 1, 2(a), and 2(b)) of the second cylindrical surface 2b, with a shear droop (corner radius portion) 3b having an R shape.

The fracture surface 4a is a tapered surface gradually reduced in outer diameter as extending upward from an upper edge of the first cylindrical surface 2a (as axially distant from the upper edge of the first cylindrical surface 2a), whereas the fracture surface 4b is a tapered surface gradually reduced in outer diameter as extending downward from a lower edge of the second cylindrical surface 2b (as axially distant from the lower edge of the second cylindrical surface 2b).

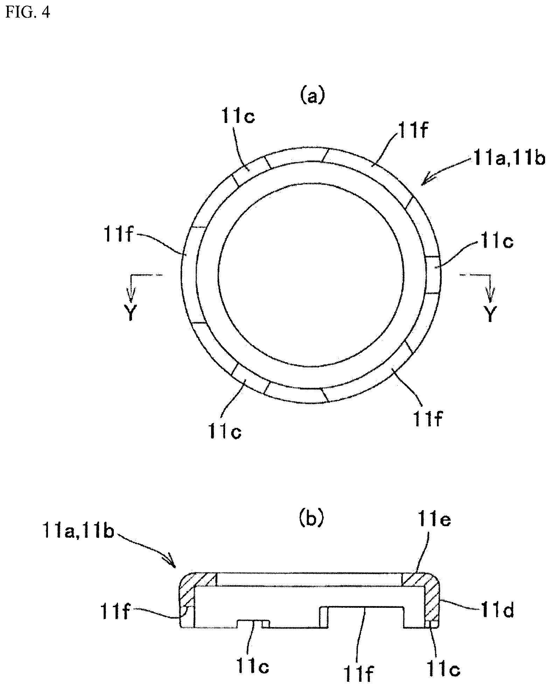

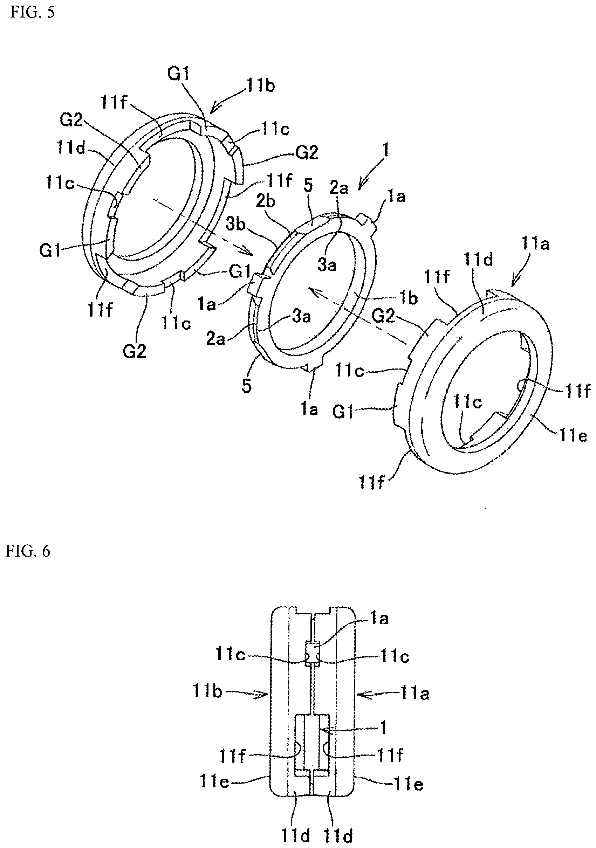

As depicted in a plan view in FIG. 4(a), a sectional view in FIG. 4(b), and an exploded perspective view in FIG. 5, the yoke cover 1 is press fitted to two electromagnetic yokes 11a and 11b that are shaped identically and each includes a cylindrical portion lid outserted to a coil bobbin (not depicted) and a ring-shaped bottom 11e provided at an axially outer end when fixed to the coil bobbin.

The electromagnetic yokes 11a and 11b are each provided with three dent portions 11c equally distant in the circumferential direction and disposed at an end opposite to the bottom 11e of the cylindrical portion 11d (the end close to the yoke cover 1), and cut-away portions 11f each disposed between the dent portions 11c and 11c adjacent to each other. The dent portions 11c and the cut-away portions 11f are disposed alternately in the circumferential direction. FIG. 5 depicts the cut-away portions 11 f circumferentially longer than the dent portions 11c, but the present invention is not limited to this case.

The cut-away portion 11 f engages with a terminal attachment portion (see the terminal attachment portion 18e in FIG. 13) of the coil bobbin (see the coil bobbin 18 in FIG. 13).

As depicted in the exploded perspective view in FIG. 5 excluding remaining components configuring the torque detection device and a front view in FIG. 6, when the yoke cover 1 is press fitted to the inner circumferences of the cylindrical portions 11d of the two electromagnetic yokes 11a and 11b, the three first cylindrical surface 2a are press fitted to the electromagnetic yoke 11a and the three second cylindrical surfaces 2b are press fitted to the electromagnetic yoke 11b.

The first cylindrical surfaces 2a of the yoke cover 1 are fitted to inner surfaces of engagement protruding pieces G1 of the electromagnetic yoke 11a whereas the second cylindrical surfaces 2b of the yoke cover 1 are fitted to inner surfaces of engagement protruding pieces G2 of the electromagnetic yoke 11b. The protrusions 1a of the yoke cover 1 engage with the dent portions 11c and 11c of the electromagnetic yokes 11a and 11b.

When the yoke cover 1 is press fitted to the electromagnetic yokes 11a and 11b as depicted in FIG. 5, the R-shaped shear droops 3a and 3b (see also FIG. 1) provided at the yoke cover 1 achieve improvement in press fitting property.

When the yoke cover 1 is assembled to the two electromagnetic yokes 11a and 11b, the yoke cover 1 including the first cylindrical surfaces 2a and the second cylindrical surfaces 2b as highly accurate smooth shear surfaces generates stable and firm retentive force in a state where the yoke cover 1 is press fitted to the inner circumferences of the cylindrical portions 11d and 11d of the electromagnetic yokes 11 a and 11b.

The yoke cover 1 press fitted to the electromagnetic yokes 11a and 11b by a depth that is regulated by the protrusions 1a of the yoke cover 1 and the dent portions 11c and 11c of the electromagnetic yokes 11 a and 11b and is less than a half of the thickness of the yoke cover 1, as depicted in FIG. 6.

The yoke cover 1 and the electromagnetic yokes 11a and 11b have only to be fitted together to prevent relative shift of the electromagnetic yokes 11 a and 11b assembled with the yoke cover 1. The yoke cover 1 can thus alternatively be transition fitted instead of being press fitted (interference fitted).

A method of producing the yoke cover 1 will be described next.

The method of producing the yoke cover 1 (see FIGs. 1 to 3(b) according to the present embodiment) includes first punching and second punching each executed by press punching.

The first punching includes press punching a plate to form the first cylindrical surfaces 2a to be fitted to the first electromagnetic yoke 11a out of the two electromagnetic yokes 11a and 11b as shear surfaces in the plurality of first circumferential portions F1 in the outer circumferential surface F.

The second punching includes press punching, in a punching direction different from that of the first punching, the plate processed through the first punching, to form the second cylindrical surfaces 2b to be fitted to the second electromagnetic yoke 11b out of the two electromagnetic yokes 11a and 11b as shear surfaces in the plurality of second circumferential portions F2 circumferentially displaced from the first circumferential portions F1 in the outer circumferential surface F.

Described next is the method of producing the yoke cover 1 according to an example of the embodiment of the present invention.

### (First punching)

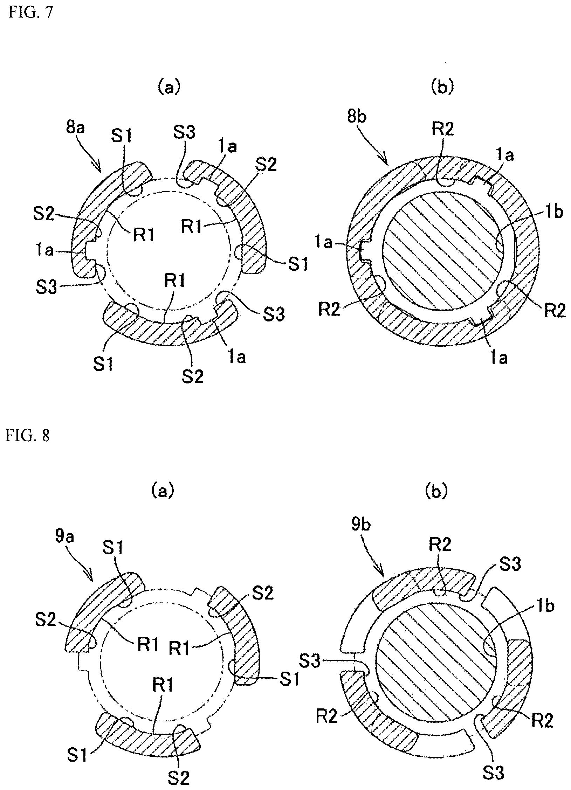

As depicted in an explanatory view in FIG. 7(a), the plate is press punched with use of a first punching die 8a hatched in the figure (e.g. punched from a rear surface to a front surface in FIG. 7(a)).

The first punching die 8a has dent portions for formation of the protrusions 1a, arc portions R1, and linear portions S1 to S3.

The plate is thus provided with the protrusions 1 a, the first cylindrical surfaces 2a as shear surfaces, the shear droops 3a, the fracture surfaces 4a, and the planar portions 5 to 7 (see FIGs. 1 to 3(b)).

### (Second punching)

As depicted in an explanatory view in FIG. 7(b), the plate is press punched with use of a second punching die 8b hatched in the figure (e.g. punched from the front surface to the rear surface in FIG. 7(b)).

The second punching die 8b has arc portions R2.

The plate is thus provided with the second cylindrical surfaces 2b as shear surfaces, the shear droops 3b, and the fracture surfaces 4b (see FIGs. 1 to 3(b)).

The second punching die 8b simultaneously punches the outer circumference and an inner circumference 1b of the yoke cover 1 to achieve accuracy of outer and inner diameters (coaxiality).

Described next is the method of producing the yoke cover 1 according to another example of the embodiment of the present invention.

### (First punching)

As depicted in an explanatory view in FIG. 8(a), the plate is press punched with use of a first punching die 9a hatched in the figure (e.g. punched from the rear surface to the front surface in FIG. 8(a)).

The first punching die 9a has the arc portions R1 and the linear portions S1 and S2.

The plate is thus provided with the first cylindrical surfaces 2a as shear surfaces, the shear droops 3a, the fracture surfaces 4a, and the planar portions 5 and 6 (see FIGs. 1 to 3(b)).

### (Second punching)

As depicted in an explanatory view in FIG. 8(b), the plate is press punched with use of a second punching die 9b hatched in the figure (e.g. punched from the front surface to the rear surface in FIG. 8(b)).

The second punching die 9b has the arc portions R2 and the linear portions S3.

The plate is thus provided with the second cylindrical surfaces 2b as shear surfaces, the shear droops 3b, the fracture surfaces 4b, and the planar portions 7 (see FIGs. 1 to 3(b)).

The second punching die 9b simultaneously punches the outer circumference and the inner circumference 1b of the yoke cover 1 to achieve accuracy of the outer and inner diameters (coaxiality).

The processing depicted in FIGs. 8(a) and 8(b) does not include punching outer peripheral portions of the protrusions 1 a. It is thus necessary to execute additional processing. It is obvious that the second punching alternatively includes punching the outer peripheral portions of the protrusions 1a

The yoke cover 1 is produced by press punching in each of the first punching and the second punching.

The first punching is executed to form the first cylindrical surfaces 2a as shear surfaces and the second punching is executed to form the second cylindrical surfaces 2b as shear surfaces. The first cylindrical surfaces 2a and the second cylindrical surfaces 2b may thus have centers displaced from each other (misaligned).

Even in such a case, the first cylindrical surfaces 2a are displaced from the axial center toward the first axial end and the second cylindrical surfaces 2b are displaced from the axial center toward the second axial end as depicted in FIG. 2(b). Accordingly, the second cylindrical surfaces 2b will not interfere when the first cylindrical surfaces 2a are fitted to the first electromagnetic yoke 11a, and the first cylindrical surfaces 2a will not interfere when the second cylindrical surfaces 2b are fitted to the second electromagnetic yoke 11b.

According to the method of producing the yoke cover 1 as described above, the press punching including the first punching and the second punching in the different punching directions provides, as shear surfaces, the first cylindrical surfaces 2a to be fitted to the first electromagnetic yoke 11a and the second cylindrical surfaces 2b to be fitted to the second electromagnetic yoke 11b. There is thus no need for shaving or the like after the press punching. Furthermore, special processing such as fine blanking is not executed, which has long cycle time and deteriorates productivity.

The shear droops are provided through the press punching at the portions closer to the first electromagnetic yoke 11 a than the first cylindrical surfaces 2a and the portions closer to the second electromagnetic yoke 11b than the second cylindrical surfaces 2b. The corner radius portions enabling highly efficient fitting are thus automatically formed through the press punching for formation of the first cylindrical surfaces 2a and the second cylindrical surfaces 2b, with no additional processing for formation of the corner radius portions.

This achieves reduction in production cost for the yoke cover 1.

Furthermore, each of the first cylindrical surfaces 2a displaced from the axial center toward the first electromagnetic yoke 11a and the adjacent one of the second cylindrical surfaces 2b displaced from the axial center toward the second electromagnetic yoke 11b, as shear surfaces formed by press punching in the different punching directions, are provided therebetween with the planar portion 5 to cause the first cylindrical surface 2a and the second cylindrical surface 2b to be distant from each other. The transition portion between the first cylindrical surface 2a and the second cylindrical surface 2b adjacent to each other will thus not affect fitting to the electromagnetic yokes 11a and 11b.

Furthermore, the yoke cover has no axial directivity with no need for consideration of the direction (the front or the rear) upon fitting.

The yoke cover 1 obtained in accordance with any one of the examples of the production method achieves improvement in workability in fitting the yoke cover 1 to the two electromagnetic yokes 11a and 11b facing each other.

The above description refers to production of the yoke cover 1 shaped as depicted in FIGs. 1 and 2(a) through press punching. The yoke cover 1 shaped as depicted in FIGs. 1 and 2(a) can be produced alternatively through machining, forging, casting, or the like.

The yoke cover 1 shaped as depicted in FIGs. 1 and 2(a) includes the cylindrical surfaces fitted to the electromagnetic yokes 11a and 11b categorized into the first cylindrical surfaces 2a fitted to the first electromagnetic yoke 11a and the second cylindrical surfaces 2b fitted to the second electromagnetic yoke 11b, and the first cylindrical surfaces 2a and the second cylindrical surfaces 2b are circumferentially displaced from each other.

Furthermore, the corner radius portion 3a is provided at the portion axially closer to the first electromagnetic yoke 11a than each of the first cylindrical surfaces 2a, and the corner radius portion 3b is provided at the portion axially closer to the second electromagnetic yoke 11b than each of the second cylindrical surfaces 2b.

Fitting the yoke cover 1 to the two electromagnetic yokes 11a and 11b then requires less force due to reduction in circumferential length of the fitted portions. Furthermore, the electromagnetic yokes 11a and 11b can be fitted along the corner radius portions provided at corners of the fitted portions for higher work efficiency.

Moreover, the first cylindrical surfaces 2a and the second cylindrical surfaces 2b are circumferentially displaced from each other. The portion axially closer to the second electromagnetic yoke 11b than each of the first cylindrical surfaces 2a is provided with the tapered surface 4a gradually reduced in outer diameter as axially distant from the axial edge of the first cylindrical surface 2a. The portion axially closer to the first electromagnetic yoke 11 a than each of the second cylindrical surfaces 2b is provided with the tapered surface 4b gradually reduced in outer diameter as axially distant from the axial edge of the second cylindrical surface 2b.

The cylindrical surfaces required to have high accuracy have smaller areas. Such smaller surfaces to be processed highly accurately lead to reduction in production cost for the yoke cover 1.

### REFERENCE SIGNS LIST

- 1: yoke cover
- 1a: protrusion
- 1b: inner circumference
- 2a: first cylindrical surface (shear surface by first punching)
- 2b: second cylindrical surface (shear surface by second punching)
- 3a, 3b: corner radius portion (shear droop)
- 4a, 4b: tapered surface (fracture surface)
- 5, 6, 7: planar portion
- 8a, 9a: first punching die
- 8b, 9b: second punching die
- 11a, 11b: electromagnetic yoke
- 11c: dent portion
- 11d: cylindrical portion
- 11e: bottom
- 11f: cut-away portion
- 13a, 13b: detection coil
- 14: yoke cover
- 14a: protrusion
- 15a,: 15belectromagnetic yoke
- 15c: dent portion
- 15d: cylindrical portion
- 15e: bottom
- 18: coil bobbin
- 18a, 18b: flange
- 18c: groove
- 18d: regulating portion
- 18e: terminal attachment portion
- 18f: terminal
- 18g: guide
- 21: steering wheel
- 22: steering gear unit
- 23: input shaft
- 24: tie rod
- 25, 25a: steering shaft
- 26, 26a: steering column
- 27: universal joint
- 28: intermediate shaft
- 29: universal joint
- 30: electric motor
- 31: inner column
- 32: outer column
- 33: lower shaft
- 34: upper shaft
- 35: housing
- 36: output shaft
- 37, 38: ball bearing
- 39: torsion bar
- 40: tubular portion
- 41: circumferential groove
- 42: female stopper
- 43: male stopper
- 44: torque detection uneven portion
- 45: torque detection sleeve
- 46a, 46b: window
- 47: torque detector
- 48: worm wheel
- 49: worm
- 50: worm speed reducer
- A: shear surface
- B: shear droop
- C: fracture surface
- c: clearance
- D: die
- E1: lower end
- E2: upper end
- F: outer circumferential surface
- F1: first circumferential portion
- F2: second circumferential portion
- G1, G2: engagement protruding piece
- M: punched product
- P: punch
- R1, R2: arc portion
- S1, S2, S3: linear portion
- T: thickness

## Claims

1. A yoke cover (1) for use in a torque detection device including paired detection coils (13a, 13b) having impedance varied by torque generated at a rotary shaft and configured to detect the torque in accordance with output voltage of the detection coils (13a, 13b), the single yoke cover (1) interposed between two electromagnetic yokes (11a, 11b) axially facing each other and fitted to inner circumferences of cylindrical portions (11d) of the two electromagnetic yokes (11a, 11b) to retain the two electromagnetic yokes (11a, 11b), the yoke cover (1) comprising:
a first cylindrical surface (2a) fitted to first one (11 a) of the two electromagnetic yokes (11a, 11b) and provided in each of a plurality of first circumferential portions (F1) in an outer circumferential surface (F), and a second cylindrical surface (2b) fitted to second one (11b) of the two electromagnetic yokes (11a, 11b) and provided in each of a plurality of second circumferential portions (F2) circumferentially displaced from the first circumferential portions (F1) in the outer circumferential surface (F); and
a corner radius portion (3a) provided at a portion axially closer to the first one (11a) of the electromagnetic yokes (11a, 11b) than each of the first cylindrical surfaces (2a), at the first circumferential portion (F1) to which the first cylindrical surface (2a) is fitted,
the portion axially closer to the second one (11b) of the electromagnetic yokes (11a, 11b) than each of the first cylindrical surfaces (2a) has a tapered surface (4a) gradually reduced in outer diameter as axially distant from an axial edge of each of the first cylindrical surfaces (2a),
a corner radius portion (3b) provided at a portion axially closer to the second one (11b) of the electromagnetic yokes (11a, 11b) than each of the second cylindrical surfaces (2b), at the second circumferential portion (F2) to which the second cylindrical surface (2b) is fitted, and
the portion axially closer to the first one (11a) of the electromagnetic yokes (11a, 11b) than each of the second cylindrical surfaces (2b) has a tapered surface (4b) gradually reduced in outer diameter as axially distant from an axial edge of each of the second cylindrical surfaces (2b).

2. The yoke cover (1) according to claim 1, wherein the first cylindrical surface (2a) and the second cylindrical surface (2b) adjacent to each other interpose a planar (5, 6, 7) or curved portion positioned radially inside a virtual cylindrical surface including the first cylindrical surface (2a) and the second cylindrical surface (2b).

3. The yoke cover (1) according to claim 1, wherein the outer circumferential surface (F) is circumferentially provided with a plurality of protrusions (1a) extending radially outward from the inner circumferences of the electromagnetic yokes (11a, 11b), the protrusions (1a) adjacent to each other interpose the single first cylindrical surface (2a) and the single second cylindrical surface (2b), and the first cylindrical surface (2a) and the second cylindrical surface (2b) adjacent to each other interpose a planar (5, 6, 7) or curved portion positioned radially inside a virtual cylindrical surface including the first cylindrical surface (2a) and the second cylindrical surface (2b).

4. A torque detection device comprising paired detection coils (13a, 13b) having impedance varied by torque generated at a rotary shaft and configured to detect the torque in accordance with output voltage of the detection coils (13a, 13b),
the torque detection device further comprising the yoke cover (1) according to any one of claims 1 to 3.

5. An electric power steering device configured to apply steering assist torque to an automotive steering system,
the electric power steering device comprising the torque detection device according to claim 4 configured to detect steering torque received by a steering mechanism, and a motor controller configured to drive control an electric motor (30) for application of the steering assist torque according to the steering torque detected by the torque detection device.

6. A method of producing a yoke cover (1) for use in a torque detection device including paired detection coils (13a, 13b) having impedance varied by torque generated at a rotary shaft and configured to detect the torque in accordance with output voltage of the detection coils (13a, 13b), the single yoke cover (1) interposed between two electromagnetic yokes (11a, 11b) axially facing each other and fitted to inner circumferences of cylindrical portions (11d) of the two electromagnetic yokes (11a, 11b) to retain the two electromagnetic yokes (11a, 11b), the method comprising:
first punching of press punching a plate to form, as a shear surface, a first cylindrical surface (2a) fitted to first one (11a) of the two electromagnetic yokes (11a, 11b), in each of a plurality of first circumferential portions (F1) in an outer circumferential surface (F); and
second punching of press punching, in a punching direction different from that of the first punching, the plate processed through the first punching, to form, as a shear surface, a second cylindrical surface (2b) press fitted to second one (11b) of the two electromagnetic yokes (11a, 11b), in each of a plurality of second circumferential portions (F2) circumferentially displaced from the first circumferential portions (F1) in the outer circumferential surface (F).

7. The method of producing the yoke cover (1) according to claim 6, wherein the first cylindrical surface (2a) and the second cylindrical surface (2b) adjacent to each other interpose a planar (5, 6, 7) or curved portion positioned radially inside a virtual cylindrical surface including the first cylindrical surface (2a) and the second cylindrical surface (2b).

8. The method of producing the yoke cover (1) according to claim 6, wherein the outer circumferential surface (F) of the yoke cover (1) is circumferentially provided with a plurality of protrusions (1a) extending radially outward from the inner circumferences of the electromagnetic yokes (11a, 11b), the protrusions (1a) adjacent to each other interpose the single first cylindrical surface (2a) and the single second cylindrical surface (2b), and the first cylindrical surface (2a) and the second cylindrical surface (2b) adjacent to each other interpose a planar (5, 6, 7) or curved portion positioned radially inside a virtual cylindrical surface including the first cylindrical surface (2a) and the second cylindrical surface (2b).

9. A method of producing an electric power steering device configured to apply steering assist torque to an automotive steering system,
the method comprising fitting the yoke cover (1) produced in accordance with the production method of any one of claims 6 to 8, to inner circumferences of cylindrical portions of two electromagnetic yokes (11 a, 11b) axially facing each other and configuring a torque detection device included in the electric power steering device.

## Patentansprüche

1. Jochabdeckung (1) zur Verwendung in einer Drehmomenterfassungsvorrichtung, die gepaarte Erfassungsspulen (13a, 13b) aufweist, deren Impedanz sich durch ein an einer Drehwelle erzeugtes Drehmoment ändert, und die dafür konfiguriert ist, das Drehmoment gemäß Ausgangsspannung der Erfassungsspulen (13a, 13b) zu erfassen, wobei die einzelne Jochabdeckung (1) zwischen zwei einander axial zugewandten elektromagnetischen Jochen (11a, 11b) angeordnet und an Innenumfängen zylindrischer Abschnitte (11d) der beiden elektromagnetischen Joche (11a, 11b) angepasst ist, um die zwei elektromagnetischen Joche (11a, 11b) zu halten, wobei die Jochabdeckung (1) aufweist:
eine erste zylindrische Fläche (2a), die an eine erste (11a) der beiden elektromagnetischen Joche (11a, 11b) angepasst ist und in jedem von mehreren ersten Umfangsabschnitten (F1) in einer Außenumfangsfläche (F) vorgesehen ist; und
eine zweite zylindrische Fläche (2b), die an ein zweites (11b) der beiden elektromagnetischen Joche (11a, 11b) angepasst ist und in jedem von mehreren zweiten Umfangsabschnitten (F2) vorgesehen ist, die in Umfangsrichtung von den ersten Umfangsabschnitten (F1) in der Außenumfangsfläche (F) versetzt sind; und
einen Eckenradiusabschnitt (3a), der an einem Abschnitt vorgesehen ist, der axial näher am ersten (11a) der elektromagnetischen Joche (11a, 11b) liegt als jede der ersten zylindrischen Flächen (2a), am ersten Umfangsabschnitt (F1), an den die erste zylindrische Fläche (2a) angepasst ist,
wobei der Abschnitt, der axial näher an dem zweiten (11b) der elektromagnetischen Joche (11a, 11b) liegt als jede der ersten zylindrischen Flächen (2a), eine sich verjüngende Fläche (4a) aufweist, deren Außendurchmesser sich axial entfernend von einem axialen Rand jeder der ersten zylindrischen Flächen (2a) graduell abnimmt;
einen Eckenradiusabschnitt (3b), der an einem Abschnitt vorgesehen ist, der axial näher am zweiten (11b) der elektromagnetischen Joche (11a, 11b) liegt als jede der zweiten zylindrischen Flächen (2b), am zweiten Umfangsabschnitt (F2), an den die zweite zylindrische Fläche (2b) angepasst ist, wobei
der Abschnitt, der axial näher am ersten (11a) der elektromagnetischen Joche (11a, 11b) angeordnet ist als jede der zweiten zylindrischen Flächen (2b), eine sich verjüngende Fläche (4b) aufweist, deren Außendurchmesser sich axial entfernend von einem axialen Rand jeder der zweiten zylindrischen Flächen (2b) graduell abnimmt.

2. Jochabdeckung (1) nach Anspruch 1, wobei die erste zylindrische Fläche (2a) und die zweite zylindrische Fläche (2b), die einander benachbart sind, einen ebenen (5, 6, 7) oder einen gekrümmten Abschnitt dazwischen einschließen, der radial innerhalb einer virtuellen zylindrischen Fläche angeordnet ist, die die erste zylindrische Fläche (2a) und die zweite zylindrische Fläche (2b) aufweist.

3. Jochabdeckung (1) nach Anspruch 1, wobei die Außenumfangsfläche (F) in der Umfangsrichtung mehrere Vorsprünge (1a) aufweist, die sich von den Innenumfängen der elektromagnetischen Joche (11a, 11b) radial nach außen erstrecken, wobei die einander benachbarten Vorsprünge (1a) die einzelne erste zylindrische Fläche (2a) und die einzelne zweite zylindrische Fläche (2b) dazwischen einschließen, und wobei die erste zylindrische Fläche (2a) und die zweite zylindrische Fläche (2b), die einander benachbart sind, einen ebenen (5, 6, 7) oder einen gekrümmten Abschnitt dazwischen einschließen, der radial innerhalb einer virtuellen zylindrischen Fläche angeordnet ist, die die erste zylindrische Fläche (2a) und die zweite zylindrische Fläche (2b) aufweist.

4. Drehmomenterfassungsvorrichtung, die gepaarte Erfassungsspulen (13a, 13b) mit einer Impedanz aufweist, die sich durch ein an einer Drehwelle erzeugtes Drehmoment ändert, und dafür konfiguriert ist, das Drehmoment gemäß Ausgangsspannung der Erfassungsspulen (13a, 13b) zu erfassen,
wobei die Drehmomenterfassungsvorrichtung ferner die Jochabdeckung (1) nach einem der Ansprüche 1 bis 3 aufweist.

5. Elektrische Servolenkungsvorrichtung, die dafür konfiguriert ist, ein Lenkunterstützungsdrehmoment für ein Fahrzeuglenksystem bereitzustellen,
wobei die elektrische Servolenkungsvorrichtung die Drehmomenterfassungsvorrichtung nach Anspruch 4, die dafür konfiguriert ist, ein durch einen Lenkmechanismus empfangenes Lenkmoment zu erfassen, und eine Motorsteuereinheit aufweist, die dafür konfiguriert ist, eine Antriebssteuerung eines Elektromotors (30) zum Bereitstellen des Lenkunterstützungsdrehmoments gemäß dem durch die Drehmomenterfassungsvorrichtung erfassten Lenkmoment auszuführen.

6. Verfahren zum Herstellen einer Jochabdeckung (1) zur Verwendung in einer Drehmomenterfassungsvorrichtung, die gepaarte Erfassungsspulen (13a, 13b) aufweist, deren Impedanz sich durch ein an einer Drehwelle erzeugtes Drehmoment ändert, und dafür konfiguriert ist, das Drehmoment gemäß Ausgangsspannung der Erfassungsspulen (13a, 13b) zu erfassen, wobei die einzelne Jochabdeckung (1) zwischen zwei einander axial zugewandten elektromagnetischen Jochen (11a, 11b) angeordnet ist und an Innenumfänge zylindrischer Abschnitte (11d) der beiden elektromagnetischen Joche (11a, 11b) angepasst ist, um die zwei elektromagnetischen Joche (11a, 11b) zu halten,
wobei das Verfahren aufweist:
einen ersten Stanzvorgang zum Pressstanzen einer Platte, um als eine Scherfläche eine erste zylindrische Fläche (2a) auszubilden, die an ein erstes (11a) der beiden elektromagnetischen Joche (11a, 11b) angepasst ist, in jedem von mehreren ersten Umfangsabschnitten (F1) in einer Außenumfangsfläche (F); und
einen zweiten Stanzvorgang zum Pressstanzen in einer Stanzrichtung, die sich von derjenigen des ersten Stanzvorgangs unterscheidet, der durch den ersten Stanzvorgang bearbeiteten Platte, um als eine Scherfläche eine zweite zylindrische Fläche (2b) auszubilden, die durch Pressung an die zweite (11b) der beiden elektromagnetischen Joche (11a, 11b) angepasst ist, in jedem von mehreren zweiten Umfangsabschnitten (F2), die in Umfangsrichtung von den ersten Umfangsabschnitten (F1) in der Außenumfangsfläche (F) versetzt sind.

7. Verfahren nach Anspruch 6, wobei die erste zylindrische Fläche (2a) und die zweite zylindrische Fläche (2b), die einander benachbart sind, einen planaren (5, 6, 7) oder einen gekrümmten Abschnitt dazwischen einschließen, der radial innerhalb einer virtuellen zylindrischen Fläche angeordnet ist, die die erste zylindrische Fläche (2a) und die zweite zylindrische Fläche (2b) aufweist.

8. Verfahren nach Anspruch 6, wobei die Außenumfangsfläche (F) der Jochabdeckung (1) in Umfangsrichtung mehrere Vorsprünge (1a) aufweist, die sich von den Innenumfängen der elektromagnetischen Joche (11a, 11b) radial nach außen erstrecken, wobei die einander benachbarten Vorsprünge (1a) die einzelne erste zylindrische Fläche (2a) und die einzelne zweite zylindrische Fläche (2b) dazwischen einschließen, und wobei die erste zylindrische Fläche (2a) und die zweite zylindrische Fläche (2b), die einander benachbart sind, einen ebenen (5, 6, 7) oder einen gekrümmten Abschnitt dazwischen einschließen, der radial innerhalb einer virtuellen zylindrischen Fläche angeordnet ist, die die erste zylindrische Fläche (2a) und die zweite zylindrische Fläche (2b) aufweist.

9. Verfahren zum Herstellen einer elektrischen Servolenkungsvorrichtung, die dafür konfiguriert ist, ein Lenkunterstützungsdrehmoment für ein Fahrzeuglenksystem bereitzustellen,
wobei das Verfahren das Anbringen der Jochabdeckung (1), die gemäß dem Herstellungsverfahren nach einem der Ansprüche 6 bis 8 hergestellt wurde, an Innenumfänge zylindrischer Abschnitte zweier elektromagnetischer Joche (11a, 11b), die einander axial zugewandt sind, und das Konfigurieren einer in der elektrischen Servolenkungsvorrichtung vorgesehenen Drehmomenterfassungsvorrichtung aufweist.

## Revendications

1. Couvercle de culasse (1) destiné à être utilisé dans un dispositif de détection de couple comprenant une paire de bobines de détection (13a, 13b) ayant une impédance modifiée par le couplé généré au niveau d'un arbre rotatif et configuré pour détecter le couple selon la tension de sortie des bobines de détection (13a, 13b), le couvercle de culasse (1) unique étant intercalé entre deux culasses électromagnétiques (11a, 11b) se faisant axialement face et monté sur les circonférences internes des parties cylindriques (11d) des deux culasses électromagnétiques (11a, 11b) pour retenir les deux culasses électromagnétiques (11a, 11b), le couvercle de culasse (1) comprenant :
une première surface cylindrique (2a) montée sur la première (11a) des deux culasses électromagnétiques (11a, 11b) et prévue dans chacune d'une pluralité de premières parties circonférentielles (F1) dans une surface circonférentielle externe (F), et une seconde surface cylindrique (2b) montée sur la seconde (11b) des deux culasses électromagnétiques (11a, 11b) et prévue dans chacune d'une pluralité de secondes parties circonférentielles (F2) circonférentiellement déplacées par rapport aux premières parties circonférentielles (F1) dans la surface circonférentielle externe (F) ; et
une partie de rayon de coin (3a) prévue au niveau d'une partie axialement plus à proximité de la première (11a) des culasses électromagnétiques (11a, 11b) que chacune des premières surfaces cylindriques (2a), au niveau de la première partie circonférentielle (F1) sur laquelle la première surface cylindrique (2a) est montée,
la partie axialement plus à proximité de la seconde (11b) des culasses électromagnétiques (11a, 11b) que chacune des premières surfaces cylindriques (2a) a une surface progressivement rétrécie (4a) progressivement réduite du point de vue du diamètre externe au fur et à mesure qu'elle est axialement à distance d'un bord axial de chacune des premières surfaces cylindriques (2a),
une partie de rayon de coin (3b) prévue au niveau d'une partie axialement plus à proximité de la seconde (11b) des culasses électromagnétiques (11a, 11b) que chacune des secondes surfaces cylindriques (2b), au niveau de la seconde partie circonférentielle (F2) sur laquelle la seconde surface cylindrique (2b) est montée, et
la partie axialement plus à proximité de la première (11a) des culasses électromagnétiques (11a, 11b) que chacune des secondes surfaces cylindriques (2b) a une surface progressivement rétrécie (4b) progressivement réduite du point de vue du diamètre au fur et à mesure qu'elle est axialement à distance d'un bord axial de chacune des secondes surfaces cylindriques (2b).

2. Couvercle de culasse (1) selon la revendication 1, dans lequel la première surface cylindrique (2a) et la seconde surface cylindrique (2b) adjacentes entre elles intercalent une partie planaire (5, 6, 7) ou incurvée, positionnée radialement à l'intérieur d'une surface cylindrique virtuelle comprenant la première surface cylindrique (2a) et la seconde surface cylindrique (2b).

3. Couvercle de culasse (1) selon la revendication 1, dans lequel la surface circonférentielle externe (F) est circonférentiellement prévue avec une pluralité de saillies (1a) s'étendant radialement vers l'extérieur à partir des circonférences internes des culasses électromagnétiques (11a, 11b), les saillies (1a) adjacentes entre elles intercalent l'unique première surface cylindrique (2a) et l'unique seconde surface cylindrique (2b), et la première surface cylindrique (2a) et la seconde surface cylindrique (2b) adjacentes entre elles intercalent une partie planaire (5, 6, 7) ou incurvée radialement positionnée à l'intérieur d'une surface cylindrique virtuelle comprenant la première surface cylindrique (2a) et la seconde surface cylindrique (2b).

4. Dispositif de détection de couple comprenant une paire de bobines de détection (13a, 13b) ayant une impédance modifiée par le couple généré au niveau d'un axe rotatif et configuré pour détecter le couple selon la tension de sortie des bobines de détection (13a, 13b),
le dispositif de détection de couple comprenant en outre le couvercle de culasse (1) selon l'une quelconque des revendications 1 à 3.

5. Dispositif de direction assistée électrique configuré pour appliquer le couple d'assistance de direction sur un système de direction automobile,
le dispositif de direction assistée électrique comprenant le dispositif de détection de couple selon la revendication 4, configuré pour détecter le couple de direction reçu par un mécanisme de direction, et un organe de commande de moteur configuré pour entraîner la commande d'un moteur électrique (30) pour l'application du couple d'assistance de direction selon le couple de direction détecté par le dispositif de détection de couple.

6. Procédé pour produire un couvercle de culasse (1) destiné à être utilisé dans un dispositif de détection de couple comprenant une paire de bobines de détection (13a, 13b) ayant une impédance modifiée par un couple généré au niveau d'un arbre rotatif et configuré pour détecter le couple selon la tension de sortie des bobines de détection (13a, 13b), le seul couvercle de culasse (1) étant intercalé entre deux culasses électromagnétiques (11a, 11b) se faisant axialement face et monté sur les circonférences internes des parties cylindriques (11d) des deux culasses électromagnétiques (11a, 11b) pour retenir les deux culasses électromagnétiques (11a, 11b), le procédé comprenant les étapes consistant à :
poinçonner une première fois par poinçonnement à la presse, une plaque afin de former, en tant que surface de cisaillement, une première surface cylindrique (2a) montée sur l'une (11a) des deux culasses électromagnétiques (11a, 11b), dans chacune d'une pluralité de premières parties circonférentielles (F1) dans une surface circonférentielle externe (F) ; et
poinçonner une deuxième fois par poinçonnement à la presse, dans une direction de poinçonnement différente de celle du premier poinçonnement, la plaque traitée par le premier poinçonnement, afin de former, en tant que surface de cisaillement, une seconde surface cylindrique (2b) montée à la presse sur une seconde (11b) des deux culasses électromagnétiques (11a, 11b), dans chacune d'une pluralité de secondes parties circonférentielles (F2) circonférentiellement déplacées par rapport aux premières parties circonférentielles (F1) dans la surface circonférentielle externe (F).

7. Procédé pour produire le couvercle de culasse (1) selon la revendication 6, dans lequel la première surface cylindrique (2a) et la seconde surface cylindrique (2b) adjacentes entre elles intercalent une partie planaire (5, 6, 7) ou incurvée positionnée radialement à l'intérieur d'une surface cylindrique virtuelle comprenant la première surface cylindrique (2a) et la seconde surface cylindrique (2b).

8. Procédé pour produire un couvercle de culasse (1) selon la revendication 6, dans lequel la surface circonférentielle externe (F) du couvercle de culasse (1) est circonférentiellement prévue avec une pluralité de saillies (1a) s'étendant radialement vers l'extérieur à partir des circonférences internes des culasses électromagnétiques (11a, 11b), les saillies (1a) adjacentes entre elles intercalent l'unique première surface cylindrique (2a) et l'unique seconde surface cylindrique (2b), et la première surface cylindrique (2a) et la seconde surface cylindrique (2b) adjacentes entre elles intercalent une partie planaire (5, 6, 7) ou incurvée radialement positionnée à l'intérieur d'une surface cylindrique virtuelle comprenant la première surface cylindrique (2a) et la seconde surface cylindrique (2b).

9. Procédé pour produire un dispositif de direction assistée électrique configuré pour appliquer un couple d'assistance de direction sur un système de direction automobile,
le procédé comprenant l'étape consistant à monter le couvercle de culasse (1) produit selon le procédé de production selon l'une quelconque des revendications 6 à 8, sur les circonférences internes des parties cylindriques des deux culasses électromagnétiques (11a, 11b) se faisant axialement face et configurer un dispositif de détection de couple compris dans le dispositif de direction assistée électrique.
